# EUROPÄISCHE PATENTSCHRIFT

(11) **EP 1 188 013 B1**
(45) Veröffentlichungstag und Bekanntmachung des Hinweises auf die Patenterteilung: **12.11.2003**
(21) Anmeldenummer: 00942083.7
(22) Anmeldetag: 16.06.2000
(51) Int. Cl.: F16L 11/15, H02G 3/04, B29D 23/18, B29C 53/08, F16L 7/00

(54) **VERFAHREN ZUR HERSTELLUNG EINES WELLROHRES MIT EINER LÄNGS EINER MANTELLINIE VERLAUFENDEN SCHLITZFÖRMIGEN ÖFFNUNG**
METHOD FOR PRODUCING A CORRUGATED TUBE COMPRISING A SLOTTED OPENING THAT EXTENDS ALONG A CONTOUR LINE
PROCEDE DE PRODUCTION D'UN TUBE ONDULE COMPORTANT UNE OUVERTURE SOUS FORME DE FENTE S'ETENDANT LE LONG D'UNE GENERATRICE

(30) Priorität: 18.06.1999 DE 19927958
(43) Veröffentlichungstag der Anmeldung: 20.03.2002
(73) Patentinhaber: Schlemmer GmbH, 85586 Poing (DE); Bayerische Motoren Werke Aktiengesellschaft, 80788 München (DE)
(72) Erfinder: STARK, Stefan, D-80798 München (DE); VOLL-MARJANOVIC, Mile, D-97437 Hassfurt (DE); GRÖBMAIR, Maximilian, D-83623 Dietramszell (DE)
(74) Vertreter: Fehners, Klaus Friedrich, Dipl.-Ing., Dipl.-Wirtsch.-Ing.
(86) Internationale Anmeldenummer: EP0005557
(87) Internationale Veröffentlichungsnummer: WO00079169

(56) Entgegenhaltungen:
- DE-A- 3 405 552
- FR-A- 2 745 429

## Beschreibung

Die vorliegende Erfindung bezieht sich auf ein Verfahren zur Herstellung eines aus Kunststoff bestehenden und insbesondere zur schützenden Ummantelung elektrischer Leitungen vorgesehenen formstabilen Wellrohres mit einer längs einer Mantellinie verlaufenden schlitzförmigen Öffnung, wobei das Wellrohr, nachdem es extrudiert und in einem Korrugator mit Wellenbergen und Wellentälern versehen ist, in einer nachgeordneten Schneidvorrichtung längs einer beliebigen Mantellinie aufgeschnitten wird.

Solche, insbesondere aus Kunststoff hergestellte Wellrohre sind bekannt und werden speziell im Kraftfahrzeugbau zur schützenden Ummantelung elektrischer Leitungen verwendet. Der in solchen Wellrohren vorgesehene Längsschlitz bzw. die durch ihn verursachte schlitzförmige Öffnung dient dazu, die zu schützenden Kabel, meist in Form eines Kabelbündels bzw. -baumes, in das Wellrohr einzulegen.

Aus dem Stand der Technik sind nun die vielfältigsten Vorschläge bekannt, die Ränder der schlitzförmigen Öffnung solcher Wellrohre so auszubilden, daß sie nach dem Einlegen der Kabel per Hand miteinander so in Kontakt gebracht werden können, daß ein Verschluß entsteht, der, sofern erforderlich, auch wieder, sei es mit oder ohne Werkzeug, geöffnet werden kann.

Je nach Ausbildung der Ränder der Schlitze bzw. der jeweiligen Verschlußformen der Längsschlitze benötigt das Verschließen solcher Rohre mehr oder weniger Zeit, abgesehen davon, daß die Ausbildung der Ränder des Längsschlitzes mehr oder weniger aufwendig gestaltet ist.

So ist es beispielsweise bekannt, die die Öffnung bildenden beiden Ränder des Schlitzes des Wellrohres so zu verformen, daß sie miteinander einen lösbaren Verschluß bilden. Diese Verformung der Ränder kann dabei vielfältig ausgebildet sein, beispielsweise nach Art eines bekannten Reißverschlusses oder auch nach Art eines Klett- oder Hakenverschlusses. Nachteilig ist, daß dabei nach dem Einlegen des Kabelbaumes in das Wellrohr dafür Sorge getragen werden muß, die Ränder des Schlitzes des Wellrohres so gegeneinander zu verbringen bzw. zueinander in Position zu bringen, daß die Verformungen miteinander eine haltende Verbindung bilden. So kann nach der DE 196 41 421 A1 der lösbare Verschluß als Überlappung der beiden verformten Ränder ausgebildet sein, wobei die Verformungen jeweils auf den Rändern ausgebildete, radial abstehende Vorsprünge sind, die ineinander verrasten. Bei einer solchen Ausführungsform ist das erneute Öffnen des Längsschlitzes schwierig.

Gegenüber solchen, in Längsrichtung des Schlitzes jeweils in Abständen voneinander vorgesehenen Verformungen können die Ränder des Schlitzes eines Wellrohres aber auch als gleichmäßig ausgebildete und über die Länge des Schlitzes durchlaufende Verformungen ausgebildet sein, wie dies beispielsweise in der DE 197 47 623 A1 beschrieben ist. Diese durchlaufenden Ränder des Schlitzes bilden die sich ineinander verhakenden Verschließvorrichtungen des Schlitzes, wobei diese Verschließvorrichtungen durch ein seitliches Zusammendrücken des Wellrohres aufeinander zugeführt und ineinander verrastet werden. Durch ein erneutes Zusammendrücken können diese durchlaufenden Verschließvorrichtungen wieder enthakt bzw. voneinander gelöst und damit der Schlitz des Wellrohres geöffnet werden.

Aus der DE 197 05 761 A1 ist es auch bekannt, das Wellrohr im Bereich des in einer Mantellinie verlaufenden Schlitzes mit einem Überlappungsbereich auszubilden, in dem die Wellenberge bzw. Wellentäler der Wellungen kleiner ausgebildet sind, als in dem übrigen Wellrohr-Bereich, so daß sie mit den Wellenbergen und Wellentälern des gegenüberliegenden Randes an dem Längsschlitz in einen überlappenden Eingriff gebracht werden können.

Einen solchen Überlappungsbereich zeigt auch die DE 197 00 916 A1, wobei dort die jeweils links bzw. rechts von dem Schlitz vorgesehenen und in geschlossenem Zustand des Wellrohres übereinander liegenden Überlappungsbereiche unterschiedlich ausgebildete Wanddicken aufweisen. Die jeweiligen Überlappungsbereiche zeichnen sich weiterhin durch eine verhältnismäßig kompliziert ausgebildete Geometrie aus, d.h., diese erfordert eine ebenfalls komplizierte Ausbildung des Werkzeuges zur Herstellung der Wellrohrform in diesem Überlappungsbereich. Auch ist dieser Druckschrift zu entnehmen, daß das Wellrohr, nachdem es in dem vorgesehenen Überlappungsbereich mit einem Schlitz versehen wurde, so zusammengedrückt wird, daß sich die jeweiligen Überlappungsbereiche übereinanderschieben und damit ein Verschluß herbeigeführt wird.

All diese vorbeschriebenen und bekannten Ausbildungen der Ränder des Längsschlitzes sind verhältnismäßig aufwendig hergestellt und bereiten oft Schwierigkeiten bei der Herstellung eines solchen Wellrohres aus Kunststoff, nämlich speziell im Extrusionsverfahren, wenn unterschiedliche Wanddicken in Teilbereichen des Rohrumfanges und/oder Hinterschneidungen vorgesehen sind.

Ziel der Erfindung ist es deshalb, das eingangs beschriebene Verfahren zur Herstellung eines Wellrohres mit einem Längsschlitz so zu verbessern, daß es einfach durchzuführen ist und das Wellrohr nach dem Öffnen und Einlegen des Kabelbaumes in einfachster und folglich schnellster Weise wieder verschlossen werden kann und es, auch wenn das Wellrohr in Kurven bzw. Bögen verlegt wird, verschlossen bleibt, andererseits aber, sofern dies erforderlich wird, wieder abschnittsweise geöffnet werden Kann, um beispielsweise an einem beschädigten Kabelabschnitt eine Reparatur vornehmen zu können.

Dieses Ziel wird dadurch erreicht, daß bei einem Verfahren gemäß der eingangs beschriebenen Art die Schnittführung unter einem gleichmäßig steigenden bzw. fallenden Winkel, der hinsichtlich seiner Neigung zwischen einem Radius des Wellrohres bzw. einer Tangente an dem Wellrohr liegt, nämlich als Schrägschnitt, erfolgt und das aufgeschnittene Wellrohr durch eine der Schneidvorrichtung nachgeordnete Verformvorrichtung hindurchgeführt und in dieser zusammengedrückt wird, so daß sich die Ränder der schlitzförmigen Öffnung übereinanderschieben und anschließend, nachdem sich das Wellrohr vollständig abgekühlt hat, der innen liegende Rand der schlitzförmigen Öffnung nach außen geführt und über den anderen, vorher außen gelegenen Rand gelegt wird.
Im Rahmen der oben geschilderten früheren Bemühungen, Wellrohre mit solchen Längsschlitzen zu versehen, die nach dem Einlegen der elektrischen Kabel mit ihren beiden Rändern durch daran vorgesehene besondere Verschließmittel verschlossen werden, aber auch wieder geöffnet werden können, hat sich herausgestellt, daß auf eine besondere und sehr aufwendige Ausgestaltung der Ränder des Längsschlitzes mit besonderen Verschließvorrichtungen verzichtet werden kann, wenn der Längsschlitz nicht, wie bisher bei allen bekannten Wellrohren, radial geführt wird, sondern wie vorstehend beschrieben, als Schrägschnitt unter einem bestimmten Winkel, der zwischen einem Radialschnitt einerseits bzw. einer an das Rohr gelegten Tangente andererseits liegt. Da das Wellrohr auch im geschlitzten Zustand aufgrund der formstabilen Eigenschaften des Kunststoffmaterials eine Rückstellkraft aufweist, schließt sich der Längsschlitz auch nach dem Einlegen der Kabel in das Wellrohr wieder. Bei Anbringung eines radial geführten Längsschlitzes und ohne Anbringung speziell an den Rändern des Längsschlitzes ausgebildeter Verschlußmittel besteht bei den vorbekannten Wellrohren aber die Gefahr, daß sich der Längsschlitz beim Verlegen eines so geschlitzten Wellrohres in Kurven bzw. Bögen in diesen Bereichen öffnet und die eingelegten Kabel aus dem Schlitzbereich nach außen heraus treten können.

Die Ausbildung des Schlitzes nach der vorbeschriebenen Erfindung verhindert aber ein solches vollständiges Öffnen eines längsgeschlitzten Wellrohres insbesondere in Kurvenbereichen, so daß das Heraustreten der eingelegten Kabel nicht erfolgen kann. Durch den Schrägschnitt wird nämlich erreicht, daß, selbst wenn sich selbstverständlich der Schlitz beim Verlegen in Kurven und Bögen erweitert und sich die den Schlitz bildenden Ränder des Wellrohres voneinander entfernen, das Heraustreten der Kabel dennoch verhindert wird, da sich ja die sich weiterhin noch überlappenden schräggeschnittenen Bereiche der Wellenberge und Wellentäler überdecken, selbst wenn ihr Abstand zueinander durch das Verlegen des Wellrohres in Bögen und Kurven vergrößert wird. Je flacher also der Schnitt geführt ist, um so weiter können sich die Ränder des Längsschlitzes voneinander entfernen, ohne daß die eingelegten Kabel aus dem geschlitzten Wellrohr, speziell im Kurven- und Bogenbereich, heraustreten können.

Durch das Zusammendrücken des Wellrohres ergibt sich zwar, daß der Durchmesser des Wellrohres geringfügig verkleinert wird, die Ränder des Schlitzes überlappen sich aber sehr weit. Damit wird der oben beschriebene Vorteil erreicht, daß sich der Schlitz durchaus, insbesondere in Kurvenbereichen, öffnen kann, ohne daß die eingelegten elektrischen Kabel aus dem Wellrohr durch den Schlitzbereich hindurch nach außen hinaustreten können.

Durch das Abkühlen des Wellrohres erhält das Kunststoffmaterial, aus dem das Wellrohr hergestellt ist, endgültig seine besonderen elastischen und flexiblen Eigenschaften, dadurch wohnt ihm nunmehr auch die Eigenschaft inne, diese ihm in dem vorbeschriebenen Herstellungsprozeß gegebene Formstabilität stets zu bewahren, d. h., auch bei Verformungen im Längsschlitzbereich die ursprüngliche Form wieder einzunehmen. Durch diese vorbeschriebene erfinderische Maßnahme der Umkehrung der sich überlappenden Ränder aus ihrer ersten Stellung in eine zweite, umgekehrte Stellung, wird dem Wellrohr eine verhältnismäßig starke Verschlußkraft bzw. ein entsprechendes Verschluß- und Haltevermögen mitgegeben, das selbst dann erhalten bleibt, wenn das Wellrohr nach dem Einlegen des Kabelbaumes, beispielsweise wegen einer Reparatur eines Kabelabschnittes, erneut geöffnet werden muß. Durch diese starke Verschlußkraft dringen die Wellenberge und Wellentäler der jeweils überlappenden Ränder des Längsschlitzes dicht ineinander und es ergibt sich damit ein sehr glatter Übergangsbereich sowohl auf der Innen- als auch auf der Außenseite des geschlitzten Wellrohres in diesem Schlitzbereich.

Die vorstehend beschriebene Erfindung und insbesondere deren überraschend gefundene Effekte bilden insofern gegenüber den nach dem Stand der Technik geschlitzten Wellrohren einen Vorteil, als sie nämlich an Wellrohren herbeigeführt werden können, die keine Verformungen in dem Mantelbereich aufweisen müssen, in dem später der radial geführte Längsschnitt eingebracht wird. Es entfällt also bei einem nach dem erfindungsgemäßen Verfahren hergestellten Wellrohr die besondere Verformung der Randbereiche des Längsschlitzes zu Verschlußmitteln bzw. sogar die ggf. zusätzlich erforderliche Anordnung von weiteren Schließmitteln, die insbesondere kosten-, aber auch zeitmäßig nachteilig sind.

Das vorstehend beschriebene Ziel der Erfindung wird weiterhin auch durch ein aus Kunststoff bestehendes und insbesondere zur schützenden Umhüllung von elektrischen Leitungen vorgesehenes formstabiles Wellrohr mit einer längs einer Mantellinie verlaufenden schlitzförmigen Öffnung erreicht, bei dem die schlitzförmige Öffnung nach dem Extrudieren und nach dem Versehen mit Wellenbergen und Wellentälern längs einer beliebigen Mantellinie ausgebildet ist. Das Wellrohr ist dadurch gekennzeichnet, daß die schlitzförmige Öffnung längs der beliebigen Mantellinie als unter einem gleichmäßig steigenden bzw. fallenden Winkel, der hinsichtlich seiner Neigung zwischen einem Radius des Wellrohres bzw. einer Tangente an dem Wellrohr liegt, nämlich als gerader Schrägschnitt ausgebildet ist, wobei das aufgeschnittene Wellrohr so zusammengedrückt ist, daß die Ränder bzw. der schlitzförmigen Öffnung übereinander liegen und der innen liegende Rand der schlitzförmigen Öffnung anschließend nach außen geführt und über den anderen, vorher außen gelegenen Rand gelegt ist.

In weiterer erfindungsgemäßer Ausbildung ist bei dem vorstehend beschriebenen Wellrohr auf der Seite des vorher innen gelegenen Randes in einem Abstand von der schlitzförmigen Öffnung ein radial nach innen gerichteter und parallel zu der Öffnung verlaufender Vorsprung vorgesehen.
Ein solcher parallel zum Schlitz verlaufender Vorsprung verleiht dem Wellrohr, sofern vorgesehen, eine gewisse Steifigkeit, die einerseits das Verlegen des Wellrohres in Kurvenbereichen nicht behindert, andererseits aber die Fähigkeit des Wellrohres, zusammengedrückt zu werden, begrenzt und damit ein in sich Einfallen des Wellschlauches verhindert und ihm auch in Verbindung mit Verteilerstücken in deren Anschlußbereichen eine höhere Widerstandskraft gegen das Herausziehen aus dem Verteilerstück verleiht.

In weiterer vorteilhafter Ausbildung ist der Vorsprung als graben- bzw. nutförmige Einbuchtung der Wandung des Wellrohres ausgebildet.
Eine solche Ausbildung des Vorsprunges erhöht die gewünschte Versteifung des Wellrohres und stabilisiert die Verschlußstellung der sich überlappenden Ränder des Wellrohrschlauches.

Vorteilhaft weist die graben- bzw. nutförmige Einbuchtung ebenfalls die wellenförmige Profilierung der Wandung des Wellrohres auf.

Erfindungsgemäß liegt der andere, vorher außen gelegene Rand mit seiner Kante gegen den diesem Rand gegenüberliegenden Vorsprung an.
Hierdurch wird erreicht, daß die verhältnismäßig scharf ausgebildete Kante des innen liegenden Randes des Wellrohres nicht die in das Wellrohr einzulegenden elektrischen Leitungen verletzen kann.

Die vorstehend dargelegte Erfindung wird nachstehend unter Bezugnahme auf bevorzugte Ausführungsformen beispielhaft näher erläutert, wobei auf die nachstehend beschriebenen Figuren Bezug genommen wird:

Es zeigen:

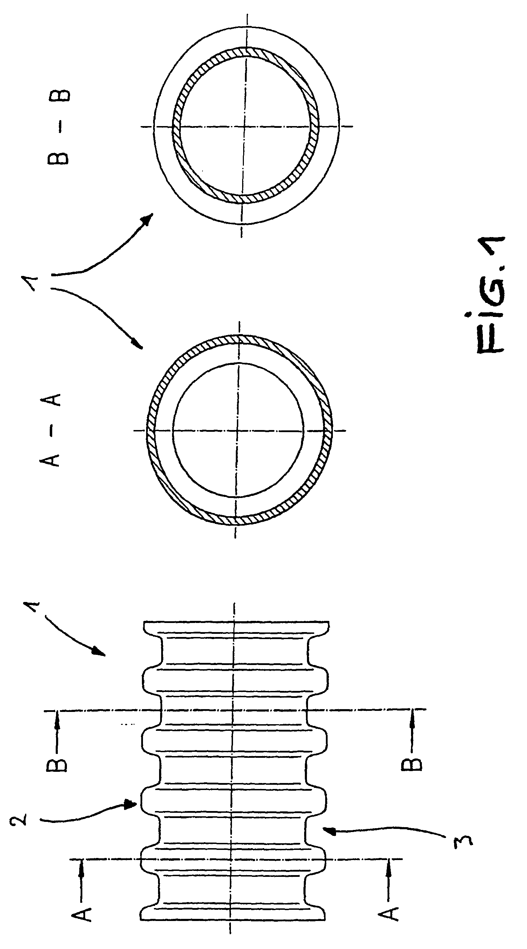

- Fig. 1:: Eine Ansicht auf einen Abschnitt eines Wellenberge und Wellentäler aufweisenden ungeschlitzten Wellrohres mit durch einen Wellenberg bzw. durch ein Wellental gelegten Schnitten A-A bzw. B-B,

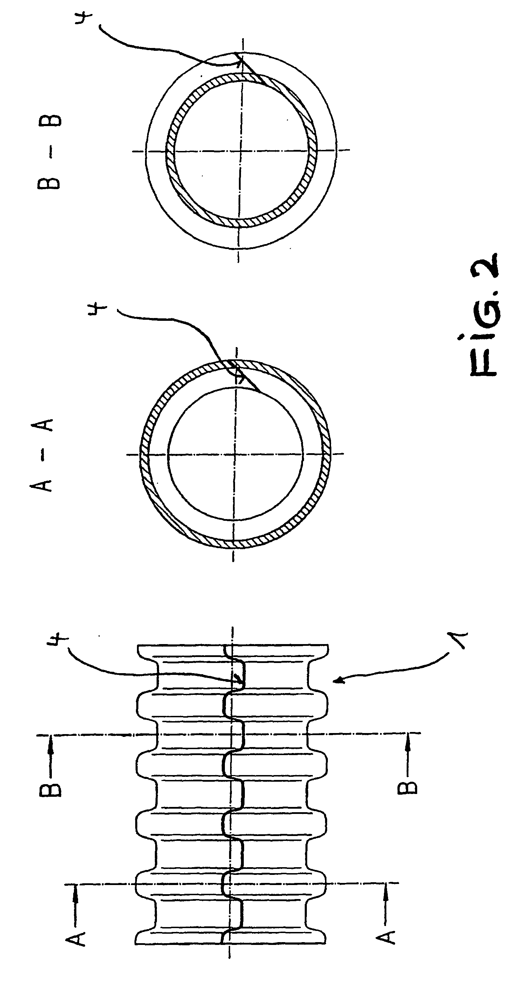

- Fig. 2:: eine Ansicht auf einen Abschnitt eines Wellenberge und Wellentäler aufweisenden Wellrohres mit durch einen Wellenberg bzw. durch ein Wellental gelegten Schnitten A-A bzw. B-B, wobei das Wellrohr einen Schrägschnitt aufweist,

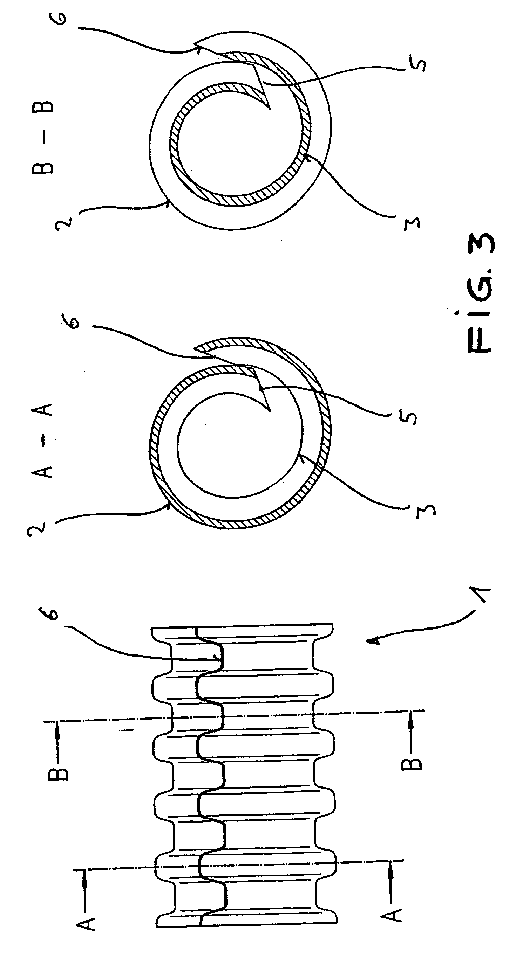

- Fig. 3:: eine Ansicht auf einen Abschnitt eines Wellenberge und Wellentäler aufweisenden Wellrohres mit durch einen Wellenberg bzw. durch ein Wellental gelegten Schnitten A-A bzw. B-B, wobei das mit dem Schrägschnitt versehene, geschlitzte Wellrohr nach dem Austritt aus einer der Schneidvorrichtung nachgeordneten Verformvorrichtung mit sich überlappenden Schlitzrändem gezeigt ist,

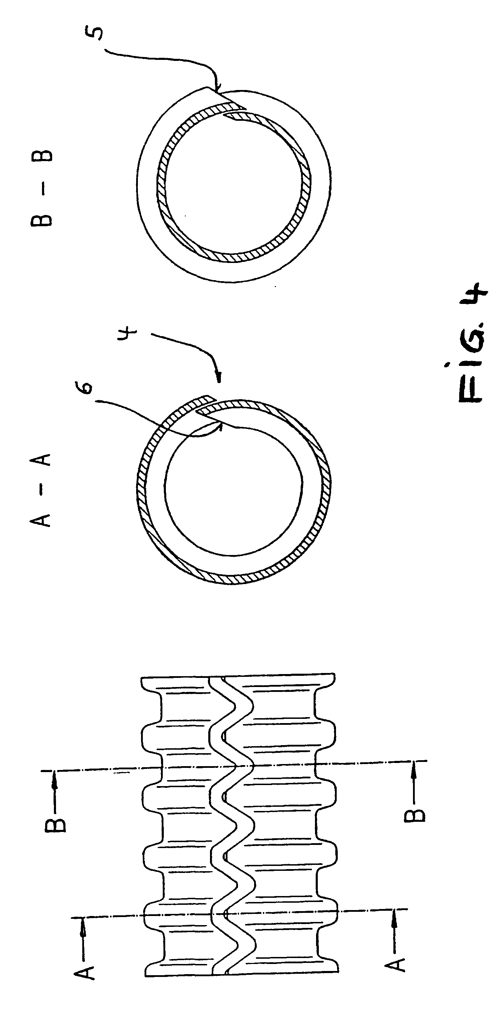

- Fig. 4:: eine Ansicht auf einen Abschnitt eines Wellenberge und Wellentäler aufweisenden Wellrohres mit durch einen Wellenberg bzw. durch ein Wellental gelegten Schnitten A-A bzw. B-B, nach dem der vorher unter dem anderen Rand liegende innere Rand nach außen und über den vorher außen liegenden anderen Rand überlappt wurde und die sich nun umgekehrt überlappenden Ränder des Längsschlitzes mit ihren Wellenbergen und Wellentälern ineinandergedrückt sind und

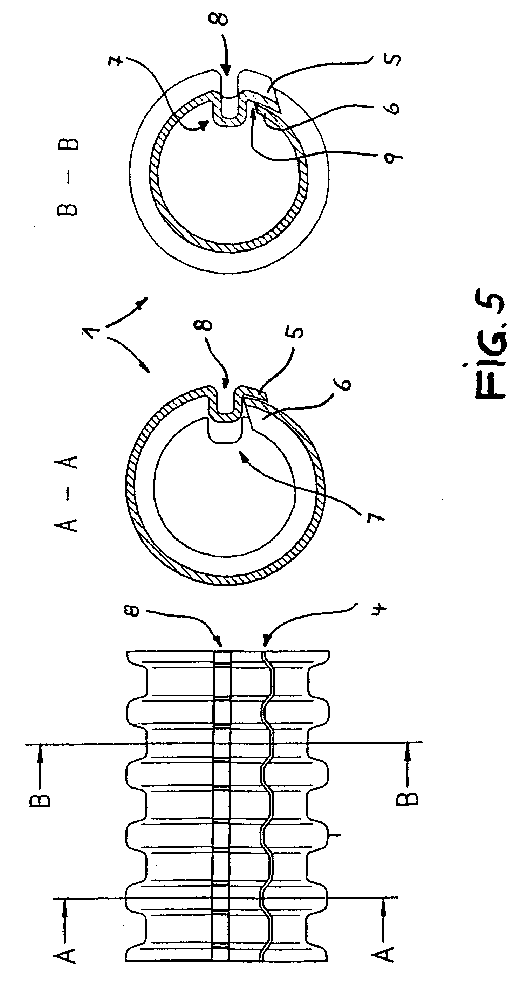

- Fig. 5:: eine Ansicht auf einen Abschnitt eines Wellenberge und Wellentäler aufweisenden Wellrohres mit durch einen Wellenberg bzw. durch ein Wellental gelegten Schnitten A-A bzw. B-B, gemäß Fig. 4, bei dem jedoch noch zusätzlich auf der Seite des nunmehr äußeren Randes in einem Abstand von der schlitzförmigen Öffnung ein radial nach innen gerichteter und parallel zu der Öffnung verlaufender Vorsprung vorgesehen ist.

Das in den Figuren dargestellte Wellrohr 1 ist aus Kunststoff hergestellt und weist über seine Längsrichtung in bestimmten Abständen angeordnete Wellenberge 2 und Wellentäler 3 auf. Das für die Herstellung solcher Wellrohre verwendete Kunststoffmaterial wird von dem Fachmann so ausgewählt, daß es dem Wellrohr die für die erforderliche Formstabilität geeignete Elastizität und Flexibilität gibt, um es einerseits in einer stabilen Längsrichtung verlegen und halten, es andererseits aber auch um Kurven und Bögen herum verlegen zu können, wobei das geschlitzte Wellrohr nach dem Öffnen zum Einlegen der elektrischen Kabel seine ursprüngliche Ausgangsform wieder einnimmt, so daß die jeweiligen Ränder des Schlitzes wieder aneinanderliegen.

Das in Fig. 1 dargestellte, aus einer Kunststoffspritzvorrichtung heraus- und durch einen Korrugator hindurchgeführte Wellrohr wird, wie in Fig. 2. dargestellt, in einer dem Korrugator nachgeordneten Schneidvorrichtung mit einem Schrägschlitz 4 versehen, wobei sich der unter einer, zwischen einem Radialschnitt und einer Tangente liegenden Winkelstellung geführte Schlitz 4 so abbildet, wie in Fig. 2 in der Seitenansicht gezeigt. Wie diesen Abbildungen zu entnehmen ist, kann die Neigung des Schräglitzes 4 nicht unbegrenzt gewählt werden, sondern nur bis an eine tangentiale Stellung an den von den Wellentälern im Innenraum des Wellrohres gebildeten Innenwandbereich heran.

Dieses so geschlitzte Rohr wird dann durch eine der Schneidvorrichtung nachgeordnete und ebenfalls nicht in den Zeichnungen dargestellte Verformvorrichtung hindurchgeführt, wobei das einen bestimmten Durchmesser aufweisende, gemäß Fig. 2 geschlitzte Wellrohr in seinem Durchmesser verringert wird, indem sich die Ränder 5 bzw. 6 des Längsschlitzes 4 übereinanderschieben, wie in den Schnitten A-A bzw. B-B in Fig. 3 dargestellt. Es ist offensichtlich, daß sich durch dieses Zusammendrücken des bei diesem Verformungsvorgang noch warmen Wellrohres die Ränder 5 bzw. 6 des Längsschlitzes 4 des Wellrohres 1 weiter übereinander schieben, d. h., das Heraustreten von in ein solches Wellrohr eingelegten elektrischen Kabeln weiterhin erschwert wird.

Das so verformte und geschlitzte Wellrohr kühlt sich dann ab, so daß das Kunststoffmaterial, aus dem das Wellrohr hergestellt ist, seine endgültige elastische und flexible Eigenschaft erhält, insbesondere aber seine Formstabilität. Dies bedeutet, daß das Wellrohr in der in Fig. 3 gezeigten Form verharren will und, sofern es aus dieser vorgegebenen Form herausgeführt wird, sich unverzüglich nach Freigabe wieder in diese vorgegebene Form selbsttätig zurückstellt.

Dieses Wellrohr ist allerdings noch nicht für seinen eigentlichen Zweck geeignet, nämlich die in ihn einzulegenden bzw. eingelegten elektrischen Kabel gegen Beschädigung zu schützen, denn insbesondere der in den Innenraum des Wellrohres hinein ragende Rand 5 des Längsschlitzes könnte diese elektrischen Kabel beschädigen. Aus diesem Grunde ist in einem weiteren Verfahrensschritt vorgesehen, beispielsweise innerhalb einer weiteren Bearbeitungsvorrichtung, ggf. auch per Hand, beispielsweise erst beim Einlegen der elektrischen Leitungen in ein solches Wellrohr, den in Fig. 3 außen liegenden Rand 6 des Längsschlitzes nach innen umzulegen. Dies wird dadurch erreicht, daß der noch innen liegende Rand 5 nach außen herausgezogen bzw. herausgeholt und über den bisher außen liegenden Rand 6 hinübergelegt wird, so wie dies in den Schnitten A-A und B-B in Fig. 4 dargestellt ist. Bei diesem Bearbeitungsvorgang des geschlitzten Wellrohres 1 wird der Durchmesser des Wellrohres wieder vergrößert und das so verformte Wellrohr möchte aufgrund seiner Formstabilität den vorherigen kleineren Durchmesser wieder einnehmen. In Folge dieses Bestrebens drücken sich die Wellentäler und Wellenberge, wie eben in Fig. 4 gezeigt, intensiv ineinander, so daß ein verhältnismäßig glatter Verschluß des Längsschlitzes 4 entsteht und insbesondere im Innenraum die Gefahr der Beschädigung der darin liegenden elektrischen Kabel nicht mehr gegeben ist.

Der in Fig. 4 dargestellte Verschluß des Längsschlitzes 4 zeigt eine hervorragende, dem Wellrohr 1 innewohnende Verschließkraft, die das Heraustreten eines von dem Wellrohr 1 umschlossenen elektrischen Kabels selbst dann verhindert, wenn dieses Wellrohr in einem kleinen Bogen bzw. in einer sehr engen Kurve verlegt wird und sich die Ränder 5 bzw. 6 des Längsschlitzes 4 etwas voneinander entfernen sollten.

In Fig. 5 ist schließlich ein Wellrohr gemäß Ausbildung nach Fig. 4 dargestellt, bei dem jedoch zusätzlich auf der Seite des vorher innen gelegenen Randes 5 in einem Abstand von der schlitzförmigen Öffnung 4 ein radial nach innen gerichteter und parallel zu der Öffnung 4 verlaufender Vorsprung 7 vorgesehen ist. Dieser Vorsprung 7 könnte in einfacher Weise als längs verlaufender Steg ausgebildet sein, in vorteilhafter Weise ist er aber, wie in Fig. 6 dargestellt, als graben- bzw. nutförmige Einbuchtung 8 der Wandung des Wellrohres 1 ausgebildet. Eine solche längs verlaufende Einbuchtung der Wandung des Wellrohres gibt diesem eine gewisse Eigensteifigkeit, und bildet darüber hinaus einen Anschlag für die scharfe Kante 9 des Randes 6 des Schlitzes 4. Durch diesen Anschlag wird verhindert, daß das Wellrohr in sich zusammenfallen bzw. zu weit zusammengedrückt werden kann. Das Zusammenschieben der sich überlappenden Ränder 5 bzw. 6 des Schlitzes 4 des Wellrohres wird dadurch begrenzt, weiter wird auch die Stabilität dieses Wellrohres in den Verbindungsbereichen mit Verteilerstücken bzw. Anschlußstücken erhöht und insbesondere auch eine höhere Widerstandskraft des Wellrohres gegen das Herausgleiten aus solchen Verteilerstücken erreicht. Insbesondere wird dadurch das versehentliche Herausziehen bzw. Herausfallen der Enden solcher Wellrohre aus Verteilerstücken bzw. Anschlüssen vermieden.

Der Vorsprung 7 und das Anliegen der Kante 9 des Randes 6 des Schlitzes 4 bewirken auch, daß die scharfe Kante 9 nicht die in das Wellrohr eingelegten elektrischen Kabel verletzen kann.

## Patentansprüche

1. Verfahren zur Herstellung eines aus Kunststoff bestehenden und insbesondere zur schützenden Umhüllung von elektrischen Leitungen vorgesehenen formstabilen Wellrohres (1) mit einer längs einer Mantellinie verlaufenden schlitzförmigen Öffnung (4), wobei das Wellrohr (1), nachdem es extrudiert und in einem Korrugator mit Wellenbergen (2) und Wellentälern (3) versehen wurde, in einer nachgeordneten Schneidvorrichtung längs einer beliebigen Mantellinie aufgeschnitten wird, **dadurch gekennzeichnet, daß** die Schnittführung unter einem gleichmäßig steigenden bzw. fallenden Winkel, der hinsichtlich seiner Neigung zwischen einem Radius des Wellrohres bzw. einer Tangente an dem Wellrohr liegt, nämlich als Schrägschnitt, erfolgt und das aufgeschnittene Wellrohr (1) durch eine der Schneidvorrichtung nachgeordnete Verformvorrichtung hindurchgeführt und in dieser zusammengedrückt wird, so daß sich die Ränder (5) bzw. (6) der schlitzförmigen Öffnung (4) übereinander schieben und anschließend, nachdem sich das Wellrohr (1) abgekühlt hat, der innen liegende Rand (5) der schlitzförmigen Öffnung (4) nach außen geführt und über den anderen, vorher außen gelegenen Rand (6) gelegt wird.

2. Aus Kunststoff bestehendes und insbesondere zur schützenden Umhüllung von elektrischen Leitungen vorgesehenes formstabiles Wellrohr (1) mit einer längs einer Mantellinie verlaufenden schlitzförmigen Öffnung (4), die nach dem Extrudieren und nach dem Versehen mit Wellenbergen (2) und Wellentälern (3) längs einer beliebigen Mantellinie ausgebildet ist, **dadurch gekennzeichnet, daß** die schlitzförmige Öffnung (4) längs der beliebigen Mantellinie als unter einem gleichmäßig steigenden bzw, fallenden Winkel, der hinsichtlich seiner Neigung zwischen einem Radius des Wellrohres bzw, einer Tangente an dem Wellrohr liegt, nämlich als gerader Schrägschnitt ausgebildet ist, wobei das aufgeschnittene Wellrohr (1) so zusammengedrückt ist, daß die Ränder (5) bzw. (6) der schlitzförmigen Öffnung (4) übereinander liegen und der innen liegende Rand (5) der schlitzförmigen Öffnung (4) anschließend nach außen geführt und über den anderen, vorher außen gelegenen Rand (6) gelegt ist.

3. Wellrohr nach Anspruch 2, **dadurch gekennzeichnet, daß** auf der Seite des vorher innen gelegenen Randes (5) in einem Abstand von der schlitzförmigen Öffnung (4) ein radial nach innen gerichteter und parallel zu der Öffnung (4) verlaufender Vorsprung (7) vorgesehen ist.

4. Wellrohr nach Anspruch 3, **dadurch gekennzeichnet, daß** der Vorsprung (7) als graben- bzw. nutförmige Einbuchtung (8) der Wandung des Wellrohres (1) ausgebildet ist.

5. Wellrohr nach Anspruch 4, **dadurch gekennzeichnet, daß** die graben- bzw. nutförmige Einbuchtung (8) ebenfalls die wellenförmige Profilierung der Wandung des Wellrohres (1) aufweist.

6. Wellrohr nach einem der Ansprüche 3 bis 5, **dadurch gekennzeichnet, daß** der andere, vorher außen gelegene Rand (6) mit seiner Kante (9) gegen den diesem Rand (6) gegenüberliegenden Vorsprung (7) anliegt.

## Claims

1. Method for the production of a dimensionally stable corrugated tube (1) made of plastic and intended in particular for the protective sheathing of electric wiring comprising a slotted opening (4) that extends along a contour line whereby the corrugated tube (1), after it has been extruded and provided with peaks (2) and valleys (3) in a corrugator, is cut open in a downstream cutting device along an optional contour line, **characterised in that** the cutting is performed under a uniformly rising or falling angle, the inclination of which lies between a radius of the corrugated tube or a tangent on the corrugated tube, namely as a diagonal cut and the cut corrugated tube (1) is pulled through a deforming device downstream of the cutting device and is compressed therein so that the ends (5) and (6) of the slotted opening (4) are pushed one on top of the other and then, when the corrugated tube (1) has cooled down, the internal end (5) of the slotted opening (4) is led outwards and laid over the other end (6) which was previously situated outside.

2. A dimensionally stable corrugated tube (1) made of plastic and intended in particular for the protective sheathing of electric wiring with a slotted opening (4) that extends along a contour line which after it has been extruded and provided with peaks (2) and valleys (3) in a corrugator, is embodied along an optional contour line, **characterised in that** the slotted opening (4) along the optional contour line is embodied under a uniformly rising or falling angle, the inclination of which lies between a radius of the corrugated tube or a tangent on the corrugated tube, namely as a diagonal cut and the cut corrugated tube (1) compressed so that the ends (5) and (6) of the slotted opening (4) lie one on top of the other and the internal end (5) of the slotted opening (4) is then led outwards and laid over the other end (6) which was previously situated outside.

3. Corrugated tube according to claim 2, **characterised in that** provided on the side of the end previously situated inside (5) at a distance from the slotted opening (4) there is a radially inwardly directed projection (7) running parallel to the opening (4).

4. Corrugated tube according to claim 3, **characterised in that** the projection (7) is embodied as a trough- or groove-shaped indentation (8) in the walls of the corrugated (1).

5. Corrugated tube according to claim 4, **characterised in that** the trough- or groove-shaped indentation (8) also has the corrugated profile of the walls of the corrugated tube (1).

6. Corrugated tube according to any one of claims 3, to 5 **characterised in that** the other end (6) previously situated outside lies with its edge (9) against the projection (7) facing this end (6).

## Revendications

1. Procédé de fabrication d'un tube ondulé (1) indéformable, constitué de matière plastique et prévu en particulier pour le gainage de protection de lignes électriques, avec une ouverture (4) en forme de fente s'étendant le long d'une génératrice, le tube ondulé (1), après avoir été extrudé et pourvu, au moyen d'une onduleuse, de crêtes (2) et de creux (3), est coupé dans un dispositif de coupe aval, le long d'une génératrice quelconque, **caractérisé en ce que** le guidage de la coupe s'effectue suivant un angle ascendant ou descendant régulièrement, qui, en ce qui concerne son ouverture se situe entre un rayon du tube ondulé ou une tangente au tube ondulé, notamment en tant que coupe oblique, et le tube ondulé (1) coupé est guidé à travers un dispositif de formage situé en aval du dispositif de coupe et est compressé dans celui-ci, de sorte que les bords (5, 6) de l'ouverture (4) en forme de fente se décallent l'un au-dessus de l'autre et se raccordent, après que le tube ondulé (1) se soit refroidi, le bord (5) horizontal situé à l'intérieur de l'ouverture (4) en forme de fente est guidé vers l'extérieur et est placé au-dessus de l'autre bord (6) situé initialement à l'extérieur.

2. Tube ondulé indéformable, constitué de matière plastique et prévu en particulier pour le gainage de protection de lignes électriques, comportant une ouverture (4) en forme de fente s'étendant le long d'une génératrice, qui est réalisé après extrusion et après avoir été pourvu de crêtes (2) et de creux (3), le long d'une génératrice quelconque, **caractérisé en ce que** l'ouverture (4) en forme de fente le long de la génératrice quelconque est réalisée notamment en tant que coupe oblique rectiligne, suivant un angle ascendant ou descendant régulièrement qui, en ce qui concerne son ouverture, se situe entre un rayon du tube ondulé ou une tangente au tube ondulé, le tube ondulé (1) coupé étant compressé de manière que les bords (5, 6) de l'ouverture (4) en forme de fente se situent l'un au-dessus de l'autre et le bord (5) situé à l'intérieur de l'ouverture (4) en forme de fente est guidé vers l'extérieur et placé au-dessus de l'autre bord (6) situé initialement à l'extérieur.

3. Tube ondulé selon la revendication 2, **caractérisé en ce que** sur le côté du bord (5) situé initialement à l'intérieur, il est prévu, à une distance de l'ouverture (4) en forme de fente, une saillie (7) dirigée radialement vers l'intérieur et s'étendant parallèlement à l'ouverture (4).

4. Tube ondulé selon la revendication 3, **caractérisé en ce que** la saillie (7) est réalisée en tant que renfoncement (8) en forme de rigole ou de rainure de la paroi du tube ondulé (1).

5. Tube ondulé selon la revendication 4, **caractérisé en ce que** le renfoncement (8) en forme de rigole ou de rainure présente également le profilage ondulé de la paroi du tube ondulé (1).

6. Tube ondulé selon l'une des revendications 3 à 5, **caractérisé en ce que** l'autre bord (6) situé initialement à l'extérieur s'applique par son arête (9) contre la saillie (7) opposée à ce bord (6).
